# EUROPÄISCHE PATENTSCHRIFT

(11) **EP 0 981 786 B1**
(45) Veröffentlichungstag und Bekanntmachung des Hinweises auf die Patenterteilung: **04.01.2006**
(21) Anmeldenummer: 99908941.0
(22) Anmeldetag: 23.02.1999
(51) Int. Cl.: G05G 1/14

(54) **PEDAL**
PEDAL
PEDALE

(30) Priorität: 17.03.1998 DE 19811442
(43) Veröffentlichungstag der Anmeldung: 01.03.2000
(73) Patentinhaber: SIEMENS AKTIENGESELLSCHAFT, 80333 München (DE)
(72) Erfinder: HERDEN, Wolfram, D-61389 Schmitten (DE); KOHLEN, Peter, D-35510 Butzbach (DE); SAUERSCHELL, Wolfgang, D-61440 Oberursel (DE)
(86) Internationale Anmeldenummer: PCT/EP1999/001160
(87) Internationale Veröffentlichungsnummer: WO 1999/047986

(56) Entgegenhaltungen:
- DE-A- 4 426 549
- DE-A- 19 500 569

## Beschreibung

Die Erfindung betrifft ein Pedal, insbesondere für ein Fahrzeug, mit einem um eine Schwenkachse schwenkbar gelagerten Pedalarm, welcher durch Fußkraft auslenkbar und von einem Rückstellfederelement in eine Grundstellung zurückschwenkbar beaufschlagt ist, wobei das Rückstellfederelement an einem ersten Hebelarm eines schwenkbar gelagerten Hebels abgestützt ist, dessen zweiter Hebelarm über einen Reibkörper an einer um die Schwenkachse des Pedalarms drehbaren, mit dem Pedalarm fest verbundenen Reibfläche zur Erzeugung einer Dämpfung der Bewegung des Pedalarms in Anlage ist.

Solche Pedale (siehe z.B. DE-A-4426549) werden heute vielfach als Fahrpedal bei Kraftfahrzeugen eingesetzt und sind damit bekannt. Bei einer Betätigung des Pedalarmes gleitet die Reibfläche über den Reibkörper und verhindert damit, daß geringfügige Veränderungen der auf den Pedalarm, aufgebrachten Fußkraft, welche beispielsweise auch unbeabsichtigt durch Rückwirkungen der Fahrzeugbewegung verursacht sein können, zu einer Veränderung der Pedalstellung führen.

Der Pedalarm hat hierzu beispielsweise eine gewölbte Reibfläche, welche gegen einen an einem freien Ende eines zweiarmigen Hebels angeordneten Reibkörper anliegt. Gleichzeitig ist der Pedalarm mittels einer Druckfeder mit dem anderen Ende des Hebels verbunden. Bei einer zunehmenden Auslenkung des Pedalarmes wird dadurch die Anpreßkraft zwischen Reibkörper und Reibfläche größer. Neben einem prinzipbedingten Ansteigen des Reibungswiderstandes bei zunehmender Auslenkung des Pedalarmes ist auch eine lediglich geringfügige Veränderung der Winkellage des Pedalhebels mit einer Änderung des Reibungswiderstandes des Reibungsdämpfers verbunden. Diese Änderung resultiert aus einem unterschiedlichen Reibungskoeffizienten zwischen dem Reibkörper und der Reibfläche für Haftreibung einerseits und für Gleitreibung andererseits. Dies führt insbesondere bei kleinen Winkeländerungen des Pedalarmes zu einem abwechselnden Haften und Gleiten, wodurch der den Reibungsdämpfer tragende Hebel zu einer Schwingung angeregt wird. Diese auch als "Stick-Slip-Effekt" bekannte Auswirkung ist für die im Inneren des Fahrzeugs befindlichen Personen als Quietschgeräusch deutlich wahrnehmbar und stellt ein erhebliches Ärgernis dar.

Es sind bereits Versuche unternommen worden dieses lästige Quietschgeräusch zu vermeiden, indem eine Kombination aus Reibkörper und Reibfläche derart ausgewählt wurde, daß deren Reibungskoeffizienten für Haft- und Gleitreibung nicht wesentlich voneinander abweichen, um so eine Schwingungserregung zu vermeiden. Hierbei stellte sich allerdings die mangelhafte Eignung für Pedale der genannten Art als hinderlich heraus, so daß die Lösung des Problems in der Praxis keine Anwendung gefunden hat.

Der Erfindung liegt daher das Problem zugrunde, ein Pedal der eingangs genannten Art so zu gestalten, daß Quietschgeräusche bei beliebiger Betätigung des Pedals vermieden oder zumindest stark abgeschwächt werden können.

Dieses Problem wird erfindungsgemäß dadurch gelöst, daß der Reibkörper über einen Schwingungsdämpfer mit dem zweiten Hebelarm des schwenkbar gelagerten Hebels verbunden ist. Hierdurch können die durch den Übergang von der Haft- zur Gleitreibung aufgrund unterschiedlicher Reibwerte und der hierdurch insbesondere bei geringfügigen und abwechselnden Änderungen der Auslenkung des Pedals entstehenden Schwingungen, insbesondere Biegeschwingungen, gegenüber dem Pedal gedämpft werden. Eine Geräuschentwicklung kann durch Entkopplung des Reibungsdämpfers von dem Pedal weitgehend unterdrückt und eine Übertragung von Schwingungen wesentlich verringert werden. Der in üblichen Pedalen verwendete Reibungsdämpfer kann somit weiterhin verwendet werden, wodurch eine aufwendige Neukonstruktion mit geänderten Reibflächen und Reibkörpern entfallen kann. Weiterhin bietet sich hierdurch auch die Möglichkeit, den Schwingungsdämpfer bei bestehenden Anlagen nachzurüsten und so lästige, durch hochfrequente Schwingungen hervorgerufene Quietschgeräusche im Nachhinein zu verringern.

Da der Schwingungsdämpfer zwischen Reibkörper und Hebel angeordnet ist, werden die Schwingungen in unmittelbarer Nähe ihrer Entstehung beseitigt, wodurch eine Entkopplung des Hebels von einem die Einzelteile des Pedals beinhaltenden Gehäuse nicht erforderlich ist.

Die die Geräusche verursachenden Schwingungen können somit bereits unmittelbar nach ihrer Entstehung im Bereich des Reibkörpers und der Reibfläche gedämpft werden. Die mit Schwingungen belegten Bauteile können so auf ein Minimum reduziert und der Wirkungsgrad des Schwingungsdämpfers verbessert werden. Gleichzeitig kann der Schwingungsdämpfer verhältnismäßig platzsparend zwischen dem Reibkörper und dem Tragkörper angeordnet werden.

Besonders wirkungsvoll ist hierbei eine Weiterbildung des erfindungsgemäßen Pedals, bei dem der Schwingungsdämpfer aus einem elastischen Material besteht. Die hervorragenden Dämpfungseigenschaften des elastischen Materials unterstützen die erreichbare Dämpfung in optimaler Weise. Gleichzeitig ist der Werkstoff einfach in der Verarbeitung und ermöglicht verschiedenste Gestaltungen.

Der Schwingungsdämpfer besteht vorzugsweise aus einem thermoplastischen Elastomer oder aus einem Kautschuk. Diese Werkstoffe sind aufgrund ihrer guten Dauerhaltbarkeit und der leichten Verarbeitbarkeit zur Verwendung in Kraftfahrzeugen besonders geeignet. Es ist vorteilhaft, wenn als Kautschuk Butylkautschuk verwendet wird, der unter Kälteeinwirkung nicht hart wird, so daß auch bei niedrigen Temperaturen die Funktionalität des erfindungsgemäßen Pedals in vollem Umfang erhalten bleibt.

Ein besonders kompakte Ausführungsform ist mit einer Ausführungsform der Erfindung gegeben, bei der der Schwingungsdämpfer und der Reibkörper ein einziges Bauteil bildend miteinander verbunden sind. Hierdurch läßt sich der Platzbedarf sowie der Montageaufwand weiter reduzieren. Gleichzeitig kann die Betriebssicherheit und die Haltbarkeit verbessert werden, da eine fehlerhafte Montage weitgehend ausgeschlossen werden kann. Bei einem gegebenenfalls dennoch erforderlichen Austausch wird mit einem neuen Reibkörper zugleich auch ein hierfür geeigneter Schwingungsdämpfer eingesetzt. Eine fehlerhafte Kombination von Reibungsdämpfer und Schwingungsdämpfer ist dadurch ausgeschlossen. In einfacher Weise kann das Bauteil ein Zwei-Komponenten-Kunststoffteit sein.

Gemäß einer anderen vorteilhaften Weiterbildung der Erfindung ist der Schwingungsdämpfer formschlüssig mit dem Hebel verbindbar. Eine formschlüssige Verbindung ist unabhängig von Klimaeinflüssen, z.B. Luftfeuchtigkeit, einfach herstellbar und weist eine sehr gute Dauerhaltbarkeit auf.

Eine besonders einfache Ausführungsform ist gegeben, wenn der Schwingungsdämpfer in den Hebel einschiebbar ist. Durch das Einschieben des Schwingungsdämpfers in den Tragkörper ist der Schwingungsdämpfer zugleich in seiner Position fixiert. Weitere Hilfsmittel sind nicht erforderlich. Bei einem verschleißbedingten Ausfall des Schwingungsdämpfers ist dessen Austausch daher mit lediglich geringem Aufwand verbunden.

Vorteilhaft ist es, wenn der Schwingungsdämpfer mit dem Hebel verklebt ist. Hierdurch läßt sich - bei geeigneter Klebstoffauswahl - vor allem eine weitere Verbesserung der schwingungsdämpfenden Eigenschaften der Anordnung erreichen, da eine Dämpfungsfunktion des Klebemittels ausgenutzt werden kann.

Eine andere Lösung des Problems gemäß der vorliegenden Erfindung ist besonders vorteilhaft, bei der der Hebel aus einem schwingungsdämpfenden Werkstoff besteht. In dem Reibungsdämpfer erzeugte und nicht vollständig von dem Schwingungsdämpfer getilgte Schwingungen werden hierbei zwar auf den Hebel übertragen, werden aber in diesem abgebaut. Hierbei braucht der Hebel keinerlei besondere Formgebung oder Gestaltung besitzen, sondern muß lediglich aus einem geeigneten Material bestehen.

Besonders gut geeignet ist hierfür eine Ausführung, bei der der Hebel aus einem Sandwich-Blech besteht, welches aus mehreren dünnen Schichten verschiedener Materialien besteht. Solche Sandwich-Bleche erlauben vielfältige Formgebungen und Umformverfahren, unter anderem sind Biegeverfahren anwendbar.

Die Erfindung läßt zahlreiche Ausführungsformen zu. Zur weiteren Verdeutlichung ihres Grundprinzips sind zwei davon in der Zeichnung dargestellt und werden nachfolgend beschrieben. Diese zeigt in
- Figur 1: eine Prinzipdarstellung eines erfindungsgemäßen Pedals mit einem Schwingungsdämpfer,
- Figur 2: eine perspektivische Darstellung eines weiteren Pedals von schräg vorn,
- Figur 3: eine perspektivische Detaildarstellung eines Tragkörpers des in Figur 2 dargestellten Pedals.

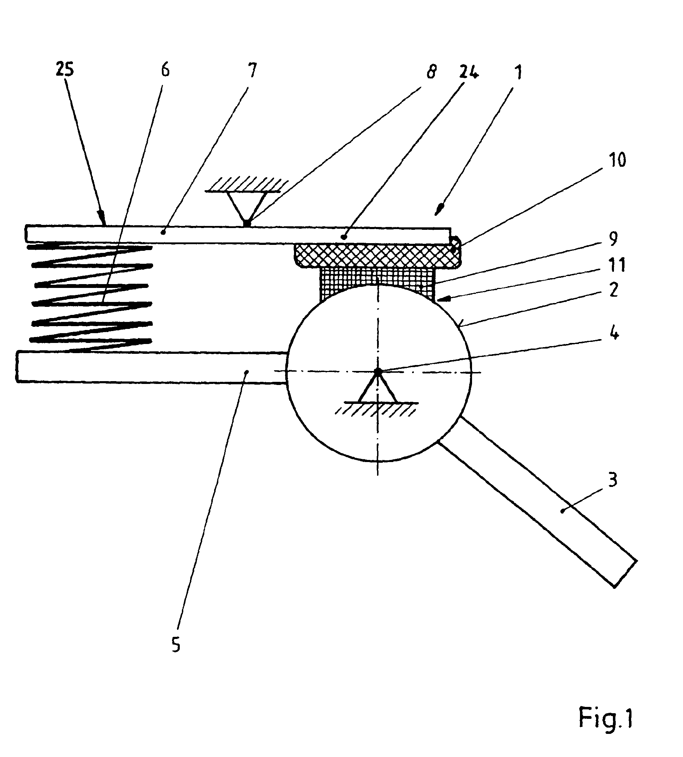

Die Figur 1 zeigt in einer Prinzipdarstellung den grundsätzlichen Aufbau eines Pedals 1, das ein Fahr-, Brems- oder Kupplungspedal eines Fahrzeugs ist. Zu erkennen ist eine als Reibscheibe ausgeführte Reibfläche 2 eines Pedalarmes 3, welcher um eine Schwenkachse 4 drehbar gelagert ist. Ebenfalls mit dem Pedalarm 3 verbunden ist ein Hebelarm 5, der an seinem freien Ende ein als Druckfeder ausgeführtes Rückstellfederelement 6 trägt. Dieses Rückstellfederelement 6 liegt gegen einen ersten Hebelarm 7 eines zweiarmigen Hebels 25 an, welcher um eine Achse 8 schwenkbar gelagert ist. An seinem dem Rückstellfederelement 6 gegenüberliegenden zweiten Hebelarm 24 ist zwischen diesem und einem gegen die Reibfläche 2 anliegenden Reibkörper 9 ein Schwingungsdämpfer 10 angeordnet. Der Reibkörper 9 und die Reibfläche 2 bilden zusammen einen Reibungsdämpfer 11, welcher durch die beschriebene Hebelanordnung einen mit zunehmendem Auslenkungswinkel des Pedalarmes 3 zunehmenden Reibungswiderstand besitzt und dem Bediener dadurch eine fühlbare Rückmeldung bezüglich der eingestellten Winkellage gestattet. Der Schwingungsdämpfer 10 dämpft die von dem Reibungsdämpfer 11 ausgehenden Schwingungen und reduziert so deren Übertragung auf weitere Bauelemente des Pedals 1, so daß akustisch wahrnehmbare Schwingungen, insbesondere Quietschgeräusche, vermieden werden können.

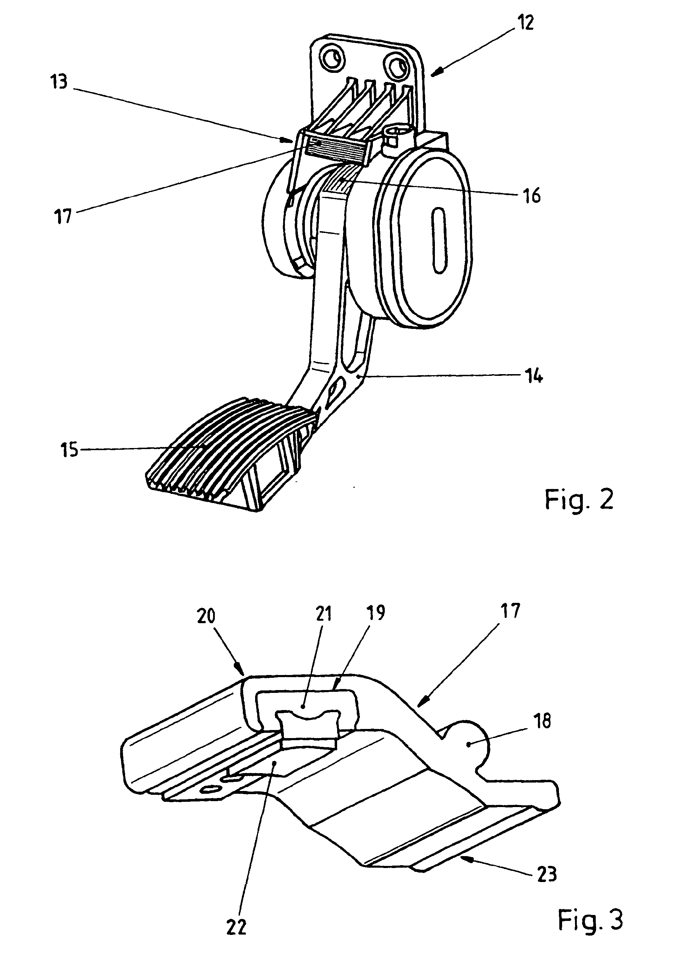

Figur 2 zeigt ein nach dem in Figur 1 dargestellten Funktionsprinzip arbeitendes Pedal 12 in einer perspektivischen Darstellung von schräg vorn. Das Pedal 12 umfaßt hierbei ein Gehäuse 13 und einen um eine nicht dargestellte Achse schwenkbar gelagerten Pedalarm 14. Der Pedalarm 14 besitzt an seinem vorderen, freien Ende eine Pedalplatte 15 zur Fußbetätigung und trägt an seinem dem Gehäuse 13 zugewandten Ende eine Reibfläche 16, die hier nur teilweise sichtbar ist. Oberhalb der Reibfläche 16 ist ein vorderer Abschnitt eines als Wippe ausgeführten Hebels 17 zu erkennen. Dieser Hebel 17 dient der Aufnahme eines nicht dargestellten Reibkörpers. Der Hebel 17 ist in dem Gehäuse 13 schwenkbar gelagert, so daß der Reibwiderstand zwischen der Reibfläche 16 und dem nicht dargestellten Reibkörper gemäß des in Figur 1 dargestellten Funktionsprinzips mit zunehmendem Auslenkungswinkel des Pedalarmes 14 veränderlich ist.

Figur 3 zeigt den in Figur 2 lediglich abschnittsweise dargestellten Hebel 17 in einer vergrößerten Darstellung. Der Hebel 17 ist als zweiarmiger Hebel ausgebildet und mit einer diesem angeformten achsförmigen Nase 18 in einer nicht dargestellten Aufnahme des Gehäuses schwenkbar. In eine Ausnehmung 19 eines Hebelarms 20 des Hebels 17 ist ein als Elastomerteil ausgeführter Schwingungsdämpfer 21 eingesetzt. Dieser Schwingungsdämpfer 21 schließt einen als Reibbelag ausgeführten Reibkörper 22 ein, der somit gegenüber dem Hebel 17 entkoppelt ist. Eine zu hörbaren Geräuschen führende Übertragung der in einem den Reibkörper 22 und die in Figur 2 dargestellte Reibfläche 16 umfassenden Reibungsdämpfer erzeugten Schwingungen auf den Hebel 17 wird dadurch verhindert. Der Hebel 17 weist weiterhin an seinem dem Schwingungsdämpfer 21 gegenüberliegenden Ende einen Hebelarm 23 auf, der gegen einen nicht dargestellten exzentrischen Abschnitt des in Figur 2 dargestellten Pedalarmes 14 anliegt und so für eine veränderliche Anpreßkraft des Reibkörpers 22 sorgt.

## Patentansprüche

1. Pedal, insbesondere für ein Fahrzeug, mit einem um eine Schwenkachse (4) schwenkbar gelagerten Pedalarm (3), welcher durch Fußkraft auslenkbar und von einem Rückstellfederelement (6) in eine Grundstellung zurückschwenkbar beaufschlagt ist, wobei das Rückstellfederelement (6) an einem ersten Hebelarm (7) eines schwenkbar gelagerten Hebels (25,17) abgestützt ist, dessen zweiter Hebelarm (24,20) über einen Reibkörper (9) an einer um die Schwenkachse (4) des Pedalarms (3) drehbaren, mit dem Pedalarm (3) fest verbundenen Reibfläche (2) zur Erzeugung einer Dämpfung der Bewegung des Pedalarms (3) in Anlage ist, **dadurch gekennzeichnet, daß** der Reibkörper (9, 22) über einen Schwingungsdämpfer (10, 21) mit dem zweiten Hebelarm (24, 20) des schwenkbar gelagerten Hebels (25, 17) verbunden ist.

2. Pedal nach Anspruch 1, **dadurch gekennzeichnet, daß** der Schwingungsdämpfer (10, 21) aus einem elastischen Material besteht.

3. Pedal nach Anspruch 2, **dadurch gekennzeichnet, daß** der Schwingungsdämpfer (10, 21) aus einem thermoplastischen Elastomer oder aus einem Kautschuk besteht.

4. Pedal nach einem der vorhergehenden Ansprüche, **dadurch gekennzeichnet, daß** der Schwingungsdämpfer (10, 21) und der Reibkörper (9, 22) ein einziges Bauteil bildend miteinander verbunden sind.

5. Pedal nach einem der vorhergehenden Ansprüche, **dadurch gekennzeichnet, daß** der Schwingungsdämpfer (10, 21) formschlüssig mit dem Hebel (25, 17) verbindbar ist.

6. Pedal nach Anspruch 5, **dadurch gekennzeichnet, daß** der Schwingungsdämpfer (10, 21) in den Hebel (25, 17) einschiebbar ist.

7. Pedal nach einem der vorhergehenden Ansprüche, **dadurch gekennzeichnet, daß** der Schwingungsdämpfer (10, 21) mit dem Hebel (25, 17) verklebt ist.

8. Pedal nach einem der vorhergehenden Ansprüche, **dadurch gekennzeichnet, daß** der Hebel (25, 17) aus einem schwingungsdämpfenden Werkstoff besteht.

9. Pedal nach Anspruch 8, **dadurch gekennzeichnet, daß** der Hebel (25, 17) aus einem Sandwich-Blech besteht.

## Claims

1. Pedal, in particular for a vehicle, having a pedal arm (3) which is mounted such that it can be pivoted about a pivot axis (4) and which can be deflected by foot force and is forced to pivot back into a starting position by a restoring-spring element (6), it being the case that the restoring-spring element (6) is supported on a first lever arm (7) of a pivotably mounted lever (25, 17), of which the second lever arm (24,20) butts, via a friction body (9), against a friction surface (2), which can be rotated about the pivot axis (4) of the pedal arm (3) and is fixedly connected to the pedal arm (3), for producing damping of the movement of the pedal arm (3), **characterized in that** the friction body (9, 22) is connected to the second lever arm (24, 20) of the pivotably mounted lever (25, 17) via a vibration damper (10, 21).

2. Pedal according to Claim 1, **characterized in that** the vibration damper (10, 21) consists of an elastic material.

3. Pedal according to Claim 2, **characterized in that** the vibration damper (10, 21) consists of a thermoplastic elastomer or of a rubber.

4. Pedal according to one of the preceding claims, **characterized in that** the vibration damper (10, 21) and the friction body (9, 22) are connected to one another to form a single component.

5. Pedal according to one of the preceding claims, **characterized in that** the vibration damper (10, 21) can be connected to the lever (25, 17) with a form fit.

6. Pedal according to Claim 5, **characterized in that** the vibration damper (10, 21) can be pushed into the lever (25, 17).

7. Pedal according to one of the preceding claims, **characterized in that** the vibration damper (10, 21) is adhesively bonded to the lever (25, 17).

8. Pedal according to one of the preceding claims, **characterized in that** the lever (25, 17) consists of a vibration-damping material.

9. Pedal according to Claim 8, **characterized in that** the lever (25, 17) comprises a sandwich-structure plate.

## Revendications

1. Pédale destinée, notamment, à un véhicule et comportant un bras de pédale (3), monté en pivotement autour d'un axe de pivotement (4), que l'on peut faire pivoter par une force appliquée au pied et qui est soumis à un élément à ressort de rappel (6) le faisant pivoter pour le ramener dans une position de repos, où l'élément à ressort de rappel (6) s'appuie sur un premier bras de levier (7) d'un levier (25, 17) monté en pivotement et dont le deuxième bras de levier (24, 20) s'applique, par l'intermédiaire d'un bloc de friction (9), sur une surface de friction (2), laquelle peut tourner autour de l'axe de pivotement (4) du bras de pédale (3) et est fixée d'une façon inamovible au bras de pédale (3), pour produire un amortissement du mouvement du bras de pédale (3), **caractérisée par le fait que** le bloc de friction (9, 22) est lié, par l'intermédiaire d'un amortisseur d'oscillations (10, 21), au deuxième bras de levier (24, 20) du levier (25, 17) monté en pivotement.

2. Pédale selon la revendication 1 **caractérisée par le fait que** l'amortisseur d'oscillations (10, 21) se compose d'une matière élastique.

3. Pédale selon la revendication 2 **caractérisée par le fait que** l'amortisseur d'oscillations (10, 21) se compose d'un élastomère thermoplastique ou d'un caoutchouc.

4. Pédale selon l'une des revendications précédentes **caractérisée par le fait que** l'amortisseur d'oscillations (10, 21) et le bloc de friction (9, 22) sont liés l'un à l'autre et forment une seule pièce.

5. Pédale selon l'une des revendications précédentes **caractérisée par le fait que** l'amortisseur d'oscillations (10, 21) peut être lié par assemblage géométrique au levier (25, 17).

6. Pédale selon la revendication 5 **caractérisée par le fait que** l'amortisseur d'oscillations (10, 21) peut être inséré en glissant dans le levier (25, 17).

7. Pédale selon l'une des revendications précédentes **caractérisée par le fait que** l'amortisseur d'oscillations (10, 21) est collé au levier (25, 17).

8. Pédale selon l'une des revendications précédentes **caractérisée par le fait que** le levier (25, 17) se compose d'une matière première amortissant les oscillations.

9. Pédale selon la revendication 8 **caractérisée par le fait que** le levier (25, 17) se compose d'une tôle sandwich.
